(19) Europäisches Patentamt
European Patent Office
Office européen des brevets

(11) Publication number : **0 134 594 B2**

(12) # NEW EUROPEAN PATENT SPECIFICATION

(45) Date of publication of the new patent specification : **27.07.94 Bulletin 94/30**

(51) Int. Cl.$^5$ : **C01B 17/04,** C01B 17/50, B01D 53/36, B01J 21/08

(21) Application number : **84200720.5**

(22) Date of filing : **16.05.84**

(54) **Process for the oxidation of hydrogen sulphide to elemental sulphur and/or sulphur dioxide.**

(30) Priority : **04.07.83 GB 8318098**

(43) Date of publication of application : **20.03.85 Bulletin 85/12**

(45) Publication of the grant of the patent : **25.11.87 Bulletin 87/48**

(45) Mention of the opposition decision : **27.07.94 Bulletin 94/30**

(84) Designated Contracting States : **BE DE FR IT NL SE**

(56) References cited :
**EP-A- 0 039 266**
**EP-A- 0 060 742**
**EP-A- 0 067 459**
**FR-A- 2 481 254**
**GB-A- 769 996**
**US-A- 4 171 347**
**Chemical Abstracts, 89, 204798p, 1987**

(73) Proprietor : **SHELL INTERNATIONALE RESEARCH MAATSCHAPPIJ B.V.**
**Carel van Bylandtlaan 30**
**NL-2596 HR Den Haag (NL)**

(72) Inventor : **Groenendaal, Willem**
**Shell Centre**
**London SE1 7NA (GB)**
Inventor : **Van Grinsven, Petrus Franciscus Antonius**
**Badhuisweg 3**
**NL 1031 CM Amsterdam (NL)**
Inventor : **Meeboer, Bob**
**Badhuisweg 3**
**NL 1031 CM Amsterdam (NL)**

(74) Representative : **Aalbers, Onno et al**
**P.O. Box 162**
**NL-2501 AN The Hague (NL)**

EP 0 134 594 B2

## Description

The invention relates to a process for the oxidation of hydrogen sulphide to elemental sulphur and/or sulphur dioxide.

Hydrogen sulphide ($H_2S$)-containing gases become available, for example, in oil refineries and from processing coke-oven gas. Natural gas may also contain $H_2S$. $H_2S$ may be removed from $H_2S$-containing gases by absorption in a regenerable absorbent. Subsequent regeneration of the absorbent yields a gas having a much higher $H_2S$ content than the $H_2S$-containing starting gas and usually also containing carbon dioxide ($CO_2$). The $H_2S$-containing gases obtained by this regeneration are usually fed to a Claus-type process for the production of elemental sulphur. "Elemental sulphur" is hereinafter also referred to as "sulphur".

In a first version of the Claus-type process an $H_2S$-containing gas is partially combusted with a free oxygen-containing gas in a furnace referred to herein as "thermal zone". In the thermal zone the following reaction takes place with regard to sulphur formation:

$$6\ H_2S + 3\ O_2 \rightleftharpoons \frac{6}{x} S_x + 6H_2O \qquad (1)$$

which can be considered as occurring in two steps:

$$2\ H_2S + 3\ O_2 \rightleftharpoons 2\ SO_2 + 2H_2O \qquad (2)$$

$$4\ H_2S + 2\ SO_2 \rightleftharpoons \frac{6}{x} S_x + 4\ H_2O \qquad (3)$$

In the thermal zone the $H_2S$ is converted to sulphur in accordance with reaction (1), the quantity of free oxygen-containing gas being such that only one third of all $H_2S$ can be oxidized to sulphur dioxide ($SO_2$) in accordance with reaction (2). The effluent gas from the thermal zone contains $H_2S$, $SO_2$, sulphur vapour, nitrogen, water vapour and usually also $CO_2$, carbon monoxide (CO), carbonyl sulphide (COS), carbon disulphide ($CS_2$) and hydrogen.

The effluent gas from the thermal zone has a temperature usually in the range of from 600 -C to 1650°C and is cooled to condense most of the sulphur vapour present, to a temperature suitably in the range of from 120°C to 200°C. Thus, sulphur is recovered as a valuable product. The gases are then re-heated, to a temperature usually in the range of from 230°C to 280°C and introduced into a first catalytic zone where $H_2S$ reacts with $SO_2$ to produce more sulphur in accordance with reaction (3). The effluent from the first catalytic zone is cooled to condense sulphur. The gas stream freed from sulphur is re-heated, toa temperature usually in the range of from 200°C to 280°C and introduced into a second catalytic zone to produce more sulphur. The second catalytic zone may be followed by a third and, if desired, the third by a fourth catalytic zone to produce still more sulphur at a temperature usually in the range of from 200°C to 280°C.

Only gases containing much $H_2S$ - more than, for example, 40% by volume - can be readily combusted in the thermal zone in accordance with reaction (1). Gases containing less $H_2S$ - between, for example, 20 and 40% by volume - can be processed according to a second version of the Claus-type process.

In the second version the $H_2S$-containing gas is split into a first portion, representing at least one third and not more than two thirds of the total $H_2S$-containing gas and a second portion containing the balance of the total $H_2S$-containing gas. The first portion is combusted with a free oxygen-containing gas in an amount stoichiometric with respect to oxidation of one third of the total amount of $H_2S$ according to reaction (2), thus forming a limited amount of sulphur.

The effluent gas from the thermal zone is cooled to condense the major part of the sulphur formed and then introduced, in admixture with the said second portion of the $H_2S$-containing gas, into a first catalytic zone from where the operation is continued as described for the first version.

Gases containing less than, for example, 20% by volume of $H_2S$, can be processed according to a third version of the Claus-type process. In the third version the $H_2S$-containing gas is pre-heated and introduced in admixture with a free oxygen-containing gas into a catalytic zone where $H_2S$ is oxidized to sulphur in accordance with reaction (1), at a temperature usually in the range of from, for example, 200°C to 280°C. The operation is then continued as described for the first version.

The remaining gases as obtained after condensation of sulphur from the gases leaving the final catalytic zone of any version of the Claus-type process are also referred to herein as "Claus tail gases". These gases

contain nitrogen, water vapour, some $H_2S$ and $SO_2$ and usually also $CO_2$, CO, COS, $CS_2$ and hydrogen. $H_2S$ and $SO_2$ are present because of the position of the equilibrium of reaction (3) at the temperature maintained in the final catalytic zone referred to hereinbefore. COS and $CS_2$ are present because at least part thereof has been formed in the thermal zone and they have only partly been hydrolyzed in the catalytic zone or zones mentioned hereinbefore.

Viewed in the light of increasingly stringent requirements with respect to air pollution abatement, various procedures have been developed to remove $H_2S$ from process off-gases, for example from Claus tail gases, and even recover, if possible, $H_2S$ or reaction products of $H_2S$ contained therein.

To remove these sulphur compounds, selective absorption by contacting the Claus tail gases with a suitable absorption solvent, after a hydrogenation treatment of the tail gases, has been practised. In this procedure, the bulk of the desorbed $H_2S$ after regeneration of the absorption solvent, is returned to the Claus unit, and the final off-gas of this Claus tail gas-treating process, which off-gas contains nitrogen, $CO_2$ and quite minor amounts of $H_2S$, is incinerated. By the incineration, $H_2S$ is converted to $SO_2$, a material which generally has not been subjected to emission requirements as rigid as those applied to $H_2S$. However, incineration is costly because of the necessary heat input.

Thus, there exists a need for an economical method for the purification of $H_2S$-containing streams, particularly off-gas streams of the type mentioned, which method would provide substantial conversion of the $H_2S$ in the off-gas, and concomitantly provide low $SO_3$ emissions. The method should be economical in that the necessary heat input should be as low as possible as evidenced by relatively low process temperatures. Moreover, the catalysts to be applied should show an activity which remains constant over a long period.

It is an object of the present invention to satisfy that need.

Another object is to catalyze reactions (1) and (2) more effectively than hitherto has been the case.

Accordingly, the invention provides a process for the oxidation of hydrogen sulphide, in which process a hydrogen sulphide-containing gas is contacted in the presence of a free oxygen-containing gas with a first catalyst composition at a temperature between 150 and 450°C to form sulphur dioxide on at a temperature between 150 and 350°C to form sulphur dioxide and/or elemental sulphur, wherein the first catalyst composition consists of titanium or a titanium compound on a silica-containing carrier.

Reference is made to EP-A-39 266 and FR-A-2 481 254 relating to oxidizing $H_2S$ by contacting an $H_2S$-containing gas in the presence of oxygen with a catalyst. These publications are not relevant to the present invention since they do not disclose oxidizing $H_2S$ by contacting an $H_2S$-containing gas in the presence of an oxygen-containing gas with a catalyst composition comprising titanium on a silica-containing carrier.

Preferably, the metal is applied as an oxide or sulphate thereof. Most preferably, at least one oxide of titanium is applied on the carrier. These oxides are themselves active catalysts or are converted to active catalysts in contact with the starting gas. Very good results have been obtained with titanium dioxide. Modifying the process according to the present invention by replacing the first catalyst composition with pure $TiO_2$ results in high $SO_3$ emissions. Surprisingly, $SO_3$ emissions are low when $TiO_2$ on a silica-containing carrier is used.

The metal(s) is (are) applied in an atomic ratio of metals to silicon which can be varied. As a rule, atomic ratios of metal to silicon in the range of from 0.001 to 1.0 are preferred, atomic ratios in the range of from 0.03 to 0.3 being particularly preferred.

Suitably, at least 50% by weight of silica is applied in the silica-containing carrier. Preferably, at least 75% and, most preferably, at least 90% by weight of silica is applied in the carrier. Among the synthetic silicas commercially available those containing at least 98.0% by weight of silica are generally the most suitable.

According to a very attractive embodiment of the present invention a carrier is used which has been prepared by the following process steps:-

- step a;) preparing a silica hydrosol by mixing an aqueous solution of an alkali metal silicate with an aqueous solution of an acid;
- step b) converting the hydrosol into droplet form;
- step c) shaping the droplets in air or in a liquid which is not miscible with water;
- step d) partially pre-drying the hydrogel particles obtained;
- step e) subjecting the partially pre-dried particles to a hydrothermal treatment;
- step f) decreasing the cation content of the hydrogel particles thus treated in an aqueous medium to less than 10% by wieght, calculated on dry material, and
- step g) drying and optionally calcining the silica particles thus obtained.

The silica support thus prepared has a very high attrition resistance and a very high mean side crushing strength. A description of this method of preparation can be found in EP-A-0067459. A suitable way of preparing the first catalyst composition comprises incorporating a compound or compounds of titanium into the silica when the silica is being prepared, for example during step a) or subsequent to step f) and prior to step g). If desired, a portion of the said compound or compounds may be incorporated into the silica during step a) and

the balance subsequent to step f) and prior to step g).

The first catalyst composition may further be prepared by such conventional techniques as, for example, dry-mixing followed by calcination, co-gellation, co-precipitation, impregnation and ionexchange. For example, a mixture of a titanium salt and a silica so may be co-gelled, the material then being dried and ground to an appropriate size, or the co-gelled material may be slurried and spray-dried. However, the first catalyst composition may, for example, also be prepared by reacting the hydroxyl groups at the surface of a silica with a titanium salt by the procedure described in U.S. patent specification No. 3,166,542, 3,220,959 or 3,274,120, thus producing a first catalyst composition in which titanium is in chemical combination with silica. Examples of suitable titanium salts are titanium tetrachloride, titanium oxalate and titanyl sulphate, ($TiOSO_4$), the latter dissolved in a mixture comprising sulphuric acid and water. In yet another technique, a fumed pyrogenic catalyst, in particular a pyrogenic titania-silica composition is prepared by combustion of hydrogen and oxygen with a mixture of silicon tetrahalide and a titanium halide, "halide" referring to fluoride, chloride, bromide or iodide.

Another suitable way of preparing the first catalyst composition comprises impregnating silica with a substantially non-aqueous solution of a titanium compound in a non-basic, essentially inert, oxygen-substituted hydrocarbon as a solvent, removing solvent from the impregnated silica and thereafter calcining the impregnated silica, again producing catalyst compositions in which titanium is in chemical combination with silica. A description of this method preparation is found in British patent specification No. 1,332,527.

The first catalyst composition may be subjected to a pre-treatment prior to utilization in the process. As a rule, it is preferable to do so in order to obtain a higher activity. The pre-treatment suitably consists in heating the first catalyst composition in the atmosphere of a non-reducing gas, such as, for example, nitrogen, argon, $CO_2$ or of a free oxygen-containing gas, such as, for example, air. However, the most suitable method of pre-treatment in general also depends upon the form of chemical combination in which the metal compound is provided. In many instances titanium compounds have to be converted into oxide. This conversion may as a rule suitably be effected by heating in a non-reducing atmosphere, at temperatures in particular in the range of from 250°C to 800°C for periods in the range of from 1 to 18 hours.

The first catalyst composition may be used according to the invention in any convenient physical form, for example, as a powder, flakes, spheres or pellets. Very good results have been obtained with spheres.

The equilibrium position of reaction (1) in a given case depends on the water content, if any, of the $H_2S$-containing starting gas. It may be desirable to dry the $H_2S$-containing gases to remove water in order to shift this equilibrium position to the right hand side.

The oxidation of $H_2S$ to sulphur in the presence of the first catalyst composition can be carried out in a wide range of temperatures and space velocities. Suitably, the temperature is in the range of from 150°C to 350°C and the space velocity in the range of from 250 to 20,000 $Nm^3$ gas per $m^3$ first catalyst composition per hour. It has been found that even when relatively low temperatures and relatively high space velocities are applied thermodynamic equilibrium of reaction (1) is reached, the first catalyst composition being very effective. Preferably, temperatures in the range of from 180°C to 250°C and space velocities in the range of from 1,000 to 10,000 $Nm^3$ gas per $m^3$ first catalyst composition per hour are applied.

As stated hereinbefore gases containing less than, for example, 20% by volume of $H_2S$ can be processed according to the third version of the Claus-type process. The $H_2S$ introduced into the catalytic zone of the third version can suitably be oxidized to sulphur in the presence of the first catalyst composition.

The amount of free oxygen to be used for the oxidation of $H_2S$ to sulphur is important in that a stoichiometric amount of oxygen with respect to reaction (1) is required; the amount of oxygen to be used if no $SO_2$ is desired should therefore be as close as possible to 50% by volume of the amount of $H_2S$ being used. As stated hereinbefore, the oxidation of $H_2S$ to sulphur can be considered as occurring in an oxidation step (reaction 2) followed by a Claus reaction (reaction 3).

The sulphur-containing gas obtained is cooled to condense sulphur therefrom, leaving an off-gas containing $H_2S$ and $SO_2$. If desired, this off-gas may be used as a starting material for further production of elemental sulphur by contacting it with the first catalyst composition at a temperature below the dew point of sulphur.

Hydrogen sulphide-containing gases usually contain minor amounts of COS and $CS_2$. These two compounds are present because at least part thereof has been formed in the thermal zone and they have only partly been converted in the catalytic zone or zones mentioned hereinbefore. During the process according to the present invention they are hydrolyzed according to the reactions

$$COS + H_2O \rightleftharpoons CO_2 + H_2S \qquad (4)$$

and

$$CS_2 + 2\,H_2O \rightleftharpoons CO_2 + 2\,H_2S \qquad (5)$$

The $H_2S$ thus formed is subsequently oxidized to sulphur according to the present invention.

The oxidation of $H_2S$ to $SO_2$ in the presence of the first catalyst composition can also be carried out in a wide range of temperatures and space velocities. The temperature is in the range of from 150 and 450°C, and suitably the space velocity is in the range of from 250 to 20,000 $Nm^3$ gas per $m^3$ first catalyst composition per hour. It has been found that even when relatively low temperatures and relatively high spaced velocities are applied $H_2S$ is substantially converted to $SO_2$ according to reaction (2). Preferably, temperatures in the range of from 250°C to 450°C and space velocities in the range of from 1000 to 10,000 $Nm^3$ gas per $m^3$ first catalyst composition per hour are applied.

The amount of free oxygen to be used for the oxidation of $H_2S$ to $SO_2$ is important in that a stoichiometric excess, preferably a large excess, of free oxygen is desired in order to oxidize substantially all $H_2S$ and any COS and $CS_2$ present. In general, at least twice and normally up to five times the stoichiometric amount of oxygen required for the oxidation to $SO_2$ may be supplied. Preferably, an excess of 20 to 280% of the stoichiometric amount of oxygen, based upon all total combustibles, will be supplied. Amounts as high as 100 or even 200 times the stoichiometric amount of free oxygen may be supplied, if desired.

The $SO_2$ formed may be discharged into the atmosphere or recovered in a manner known to those skilled in the art.

Although the oxidation of $H_2S$ to $SO_2$ according to the invention is applicable to any $H_2S$-containing gas of low to moderate $H_2S$ content, the invention is ideally suited to the treatment of $H_2S$-containing off-gases from various processes from which no further or little recovery of other materials is made, for example to the incineration of a Claus tail gas.

Additionally, as indicated, off-gases may previously have been processed by an off-gas-treating process in order to reduce the contents of combined and elemental sulphur thereof. The invention is eminently suited to the removal of $H_2S$ from off-gases of a Claus tail gas-treating process. Such a process may comprise the step of catalytically reducing $SO_2$, COS, $CS_2$ and sulphur trioxide ($SO_3$) contained in the gas under suitable conditions to $H_2S$.

So, according to a preferred embodiment of the present invention in which hydrogen sulphide is oxidized to elemental sulphur, the hydrogen sulphide has been obtained by reducing Claus tail gases at a temperature above 175°C with a free hydrogen- and/or carbon monoxide-containing gas over a second catalyst composition comprising a sulphided metal from Group 6 and/or Group 8 of the Periodic Table of the Elements and an inorganic oxide carrier supporting the said sulphided metal(s). The hydrogen sulphide present in the reduced Claus tail gases is then oxidized to sulphur in the presence of the first catalyst composition.

The reduction of Claus tail gases in the presence of the second catalyst composition is preferably carried out in the presence of at least the stoichiometric quantity of hydrogen and/or CO for complete conversion of sulphur and $SO_2$ into $H_2S$. Generally, 1.3-2.0 times the required stoichiometric quantity is used. Water present in Claus tail gases hydrolyses COS and $CS_2$ according to reactions (4) and (5), respectively.

Methods of preparation and the most suitable composition of the second catalyst composition and the conditions at which the reduction may be carried out, such as the pressure, the gas hourly space velocity and the composition of the free hydrogen- and/or free carbon monoxide-containing gas are found in British patent specification No. 1,356,289.

The reduced Claus tail gas is preferably dried to remove water prior to the oxidation of $H_2S$ to sulphur, thus moving the equilibrium position of reaction (1) to the right hand side. Drying may be carried out by, for example, condensation of water from the reduced Claus tail gas.

According to a preferred embodiment of the present invention elemental sulphur is removed from the gases after having contacted the first catalyst composition and $H_2S$ remaining in the substantially sulphur-free gases is oxidized to sulphur dioxide, preferably in the presence of the first catalyst composition. As in this manner 98.5 to 99.0% of the combined and elemental sulphur can be removed from Claus tail gases, the gases obtained after oxidation to $SO_2$ over the first catalyst composition can usually be discharged into the atmosphere without objection.

According to another preferred embodiment of the present invention in which hydrogen sulphide is oxidized to sulphur dioxide, the hydrogen sulphide has been obtained by reducing Claus tail gases at a temperature above 175°C with a free hydrogen- and/or carbon monoxide-containing gas over a second catalyst composition comprising a sulphided metal from Group 6 and/or Group 8 of the Periodic Table of the elements and an inorganic oxide carrier supporting the said sulphided metal(s), absorbing the $H_2S$ present in the reduced gases followed by desportion of the $H_2S$ and recycle of the desorbed $H_2S$ to the Claus plant, the hydrogen sulphide to be oxidized to sulphur dioxide remaining in the final off-gas from said absorption of $H_2S$. This hydrogen sulphide is oxidized to sulphur dioxide in the presence of the first catalyst composition.

The pressures employed in the process according to the invention are not critical and may vary within a wide range. The total pressure may be at or in excess of atmospheric pressure, although sub-atmospheric pressure may be used. Preferably, the presusre is at least atmospheric and may be up to, for example, 10 bar.

The free oxygen may be supplied as, for example, pure oxygen, oxygen-enriched air, air, or other gaseous streams containing significant quantities of oxygen and other components which do not interfere significantly with the reaction contemplated.

The following Examples further illustrate the invention. The pore volumes of the starting silicas have been measured by means of absorption of liquid water.

Example 1

An amount (bulk volume 250 ml, weight 98 g) of silica gel spheres (pore volume 1.10 ml/g, surface area 300 $m^2/g$) was kept for 15 min under a pressure of 0.02 bar abs. The spheres were then impregnated with tetraisopropylorthotitanate under nitrogen of atmospheric pressure. The impregnated spheres were dried at a temperature of 110°C and the temperature of the dried spheres was increased to 250° at a rate of 100°C/ h and to 500°C at a rate of 50°C/h. The temperature was kept for one hour at 500°C, increased at a rate of 50°C/h to 550°C and kept for 3 h at 550°C. Then, the spheres were allowed to adopt ambient temperature. The catalyst composition thus prepared is referred to hereinafter as "first catalyst composition A"; some properties thereof are stated in Table I.

Table I

| First catalyst composition | Atomic ratio Ti/Si | Size of spheres mm | Pore volume ml/g | Surface area $m^2/g$ |
|---|---|---|---|---|
| A | 0.21 | 1.6 | 0.84 | 221 |
| B | 0.08 | 5.0 | 0.54 | 312 |
| C | 0.08 | 5 | 0.58 | 303 |
| D | 0.05 | 2.5 | 1.33 | 197 |

A cylindrical tube having an inside diameter of 4.09 cm was charged over a height of 38.1 cm with a fixed bed of first catalyst composition A. A gaseous feed composed as shown in Table II was conducted in downflow through the fixed bed. Conditions of operation are shown more specifically in Table II. Significant $H_2S$-removal is obtained at temperatures above 200°C; the results for three different temperatures are presented in Table III.

Table II

| Composition, %v | |
|---|---|
| $H_2S$ | 5.73 |
| $O_2$ | 11.2 |
| $N_2$ | 44.8 |
| $CO_2$ | 11.0 |
| $H_2O$ | 27.2 |

Operating conditions

Pressure : atmospheric
Space velocity : 1000 Nl per 1 first catalyst composition A per h
Air rate : 30% excess $O_2$

Table III

| Temperature, °C | 200 | 250 | 300 |
|---|---|---|---|
| Composition | | | |
| $H_2S$, ppmv | 760 | 700 | 360 |
| $SO_2$, %v | 5.82 | 5.83 | 5.84 |
| $SO_3$, ppmv | 80 | 47 | 56 |

Example 2

A feed composed as stated in Table IV was conducted with a space velocity of 1000 Nl per 1 first catalyst composition A per hour through the catalyst bed used in Example 1. Three different temperatures were used. The $H_2S$ and $SO_2$ contents of the off-gas are presented in Table IV.

Table IV

| Composition, %v | Feed | Off-gas 175°C | Off-gas 200°C | Off-gas 250°C |
|---|---|---|---|---|
| $H_2S$ | 6.24 | 1.64 | 0.47 | 0.44 |
| $SO_2$ | 0 | 1.16 | 0.48 | 0.45 |
| $O_2$ | 3.06 | x) | x) | x) |
| $N_2$ | 49.1 | 48.4 | 47.8 | 47.8 |
| $CO_2$ | 12.0 | 11.8 | 11.7 | 11.7 |
| $H_2O$ | 29.6 | 33.6 | 34.4 | 34.4 |
| S | 0 | 3.35 | 5.13 | 5.19 |
| Total sulphur conversion, % | | 54 | 84 | 85 |

x) not determined

Table IV shows that significant conversion of $H_2S$ to sulphur takes place at temperatures above 175°C.

Example 3

Example 1 was modified in that a gas composed as stated in Table V was conducted with a space velocity of 2000 Nl per 1 first catalyst composition per hour through the bed of first catalyst composition A.

Table V

| Composition, %v on water-free gas | |
|---|---|
| $H_2S$ | 1.01 |
| $N_2$ | 81.5 |
| $CO_2$ | 17.0 |
| $O_2$ | 0.50 |

Table VI states which combinations of temperature and water content were used and also presents the composition of the off-gas and the total sulphur conversion.

Table VI

| | | | | | |
|---|---|---|---|---|---|
| Temperature, °C | 250 | 200 | 200 | 200 | 250 |
| Water content of feed, %v | 30 | 30 | 7.4 | 0 | 0 |
| Off-gas composition, %v on water-free basis | | | | | |
| $H_2S$ | 0.62 | 0.61 | 0.41 | 0.13 | 0.47 |
| $SO_2$ | 0.40 | 0.38 | 0.23 | 0.12 | 0.27 |
| S | 0 | 0.02 | 0.37 | 0.76 | 0.27 |
| Total sulphur conversion, % | 0 | 2 | 37 | 76 | 27 |

The thermodynamic equilibrium was reached in each of these five experiments. Table VI clearly shows that removal of water from the feed has a very favourable effect on the total sulphur conversion.

Example 4

An amount (46.19 g) of tetraisopropylorthotitanate was added dropwise under nitrogen to water (150 ml) and the precipitate thus formed was filtered off and washed three times with water (10 ml each time). The $TiO_2$ thus obtained was added to a solution of oxalic acid (12.6 g) in water (80 ml). Then, oxalic acid (10.23 g) was added. The mixture thus obtained was filtered off, yielding 110 ml of an opale liquid. An amount (84.5 g, bulk volume 200 ml) of silica gel spheres (pore volume 1.02 ml, surface area 349 $m^2/g$) was impregnated with this solution (110 ml). The impregnated spheres were dried at a temperature of 120°C and the temperature of the dried spheres was increased to 320°C at a rate of 100°C/h, kept for 0.5 h at 320°C, increased at a rate of 100°C/h to 600°C and kept for one hour at 600°C. Then, the spheres were allowed to adopt ambient temperature.

The first catalyst composition thus prepared is referred to as "first catalyst composition B"; some properties thereof are stated in Table I.

A cylindrical tube having an inside diameter of 4.09 cm was charged over a height of 38.4 cm with a fixed bed of first catalyst composition B. A gaseous feed composed as shown in Table VII was conducted in downflow through the fixed bed at a space velocity of 1000 Nl per l first catalyst composition B per hour. Table VII presents the composition of the off-gas.

Table VII

| Compound | Composition, % by volume feed | off-gas |
|---|---|---|
| $H_2S$ | 0.98 | 0.12 |
| $SO_2$ | 0 | 0.05 |
| $SO_3$ | 0 | <0.0005 |
| $H_2O$ | 4.5 | 5.4 |
| $CO_2$ | 11.7 | 11.7 |
| $O_2$ | 0.5 | <0.0001 |
| $N_2$ | 82.3 | 82.0 |
| S | 0 | 0.8 |

The temperature and a further result are stated in Table VIII.

Table VIII

| Example | First catalyst composition | Temperature °C | Approach of thermodynamic equilibrium reaction (1), % | Content in off-gas, ppmv, of $H_2S$ | $SO_3$ |
|---|---|---|---|---|---|
| 4 | B | 250 | 100 | — | — |
| 5 | B | 300 | 100 | — | — |
| 6 | C | 250 | 100 | — | — |
| 7 | D | 250 | 100 | — | — |
| 8 | B | 250 | — | 30 | not determined |
| 9 | B | 300 | — | <3 | 7 |
| 10 | B | 350 | — | <3 | <5 |
| 11 | C | 300 | — | 6 | 5 |
| 12 | C | 350 | — | <3 | <5 |
| 13 | D | 300 | — | 8 | <5 |
| 14 | D | 350 | — | <3 | <5 |

Example 5

The experiment described in Example 4 was modified in that a temperature of 300°C was applied. Table VIII presents the results.

Example 6

$TiCl_4$ (38.85 g) was added dropwise at a temperature of 4 to 13°C to water (150 ml). An amount (146 ml) of the solution thus obtained was used for impregnation of silica gel spheres (128.4 g, bulk volume 300 ml, pore volume 1.02 ml/g, surface area 349 $m^2/g$). The impregnated spheres were then treated as described for first catalyst composition B except that a temperature of 500°C instead of 600°C was used. The first catalyst composition thus prepared is referred to as "first catalyst composition C"; some properties thereof are stated in Table I.

The experiment described in Example 4 was modified in that first catalyst composition C was used. The result is presented in Table VIII.

Example 7

An aqueous solution of sodium silicate was mixed with a solution obtained by dissolving $TiO_2$ in dilute aqueous sulphuric acid, using a volume ratio of the latter to the former solution of 0.75. The hydrosol thus obtained was shaped into droplet form, the droplets were shaped in air and pre-dried at 120°C for 7.5 min. The pre-dried particles were quenched with water to 20°C and the temperature of the particles was increased over a period of 2.5 h from 20°C to 150°C in the presence of liquid water and kept for 1h at 150°C. The particles were allowed to adopt a temperature of 20°C, washed with dilute sulphuric acid, dried for 20 h at 120°C, heated over a period of 5 min from 20°C to 875°C and kept for 10 min at 875°C. Then, the particles were allowed to adopt ambient temperature. The catalyst composition thus prepared is referred to as "first catalyst composition D"; some properties thereof are stated in Table I.

The experiment described in Example 4 was modified in that first catalyst composition D was used.

The result is presented in Table VIII.

Comparative Experiment

The experiment described in Example 4 was modified in that the bed of first catalyst composition B was replaced with silica spheres.

Reaction (1) had reached only 54% of the thermodynamic equilibrium.

Examples 8, 9 and 10

The experiment described in Example 4 was modified in that a gaseous feed composed as shown in Table IX was used at the temperatures shown in Table VIII. Table VIII also presents the results.

Table IX

| Composition, | %vol |
|---|---|
| $H_2S$ | 1.0 |
| $N_2$ | balance |
| $CO_2$ | 11.4 |
| $H_2O$ | 12.0 |
| $O_2$ | 3.6 |

Examples 11 and 12

The experiments described in Examples 9 and 10 were modified in that first catalyst composition C was used. Table VIII presents the results.

Examples 13 and 14

The experiments described in Examples 9 and 10 were modified in that first catalyst composition D was used. Table VIII presents the results.

Comparative Experiment

The experiment described in Example 10 was modified in that first catalyst composition B was replaced with pure titanium dioxide. The off-gas contained less than 4 ppmv of $H_2S$ and 50 ppmv of $SO_3$.

## Claims

1. A process for the oxidation of hydrogen sulphide, in which process a hydrogen sulphide-containing gas is contacted in the presence of a free oxygen-containing gas with a first catalyst composition at a temperature between 150 and 450°C to form sulphur dioxide or at a temperature between 150 and 350°C to form sulphur dioxide and/or elemental sulphur, wherein the first catalyst composition consists of titanium or a titanium compound on a silica-containing carrier.

2. A process as claimed in claim 1, in which the titanium compound is applied as titanium oxide or titanium sulphate.

3. A process as claimed in claim 1 or 2, in which the said metal is applied in the catalyst composition in an atomic ratio of metal to silicon in the range of from 0.001 to 1.0.

4. A process as claimed in claim 3, in which the atomic ratio being applied is in the range of from 0.03 to 0.3.

5. A process as claimed in claims 1-4, in which at least 75% by weight of silica is applied in the carrier.

6. A process as claimed in claim 5, in which at least 90% by weight of silica is applied in the carrier.

7. A process as claimed in any one of claims 1-6, in which hydrogen sulphide is oxidized to sulphur dioxide supplying the free oxygen-containing gas in an amount of up to five times the stoichiometric amount of oxygen required for oxidation to sulphur dioxide.

8. A process as claimed in claim 7, in which the free oxygen-containing gas is supplied in an excess of 20% to 280% of the stoichiometric amount of oxygen.

9. A process as claimed in claim 1, in which hydrogen sulphide is oxidized to elemented sulphur at a temperature in the range of from 180°C to 250°C.

## Patentansprüche

1. Ein Verfahren zur Oxidation von Schwefelwasserstoff, in welchem Verfahren ein schwefelwasserstoffhaltiges Gas in Anwesenheit eines freien Sauerstoff enthaltenden Gases mit einer ersten Katalysatorzusammensetzung bei einer Temperatur zwischen 150 und 450°C kontaktiert wird, um Schwefeldioxid zu bilden, oder bei einer Temperatur zwischen 150 und 350°C kontaktiert wird, um Schwefeldioxid und/oder elementaren Schwefel zu bilden, wobei die erste Katalysatorzusammensetzung aus Titan oder einer Titanverbindung auf einem Siliciumdioxid enthaltenden Trägermaterial besteht.

2. Ein Verfahren wie in Anspruch 1 beansprucht, in welchem die Titanverbindung als Titanoxid oder Titansulfat angewendet wird.

3. Ein Verfahren wie in Anspruch 1 oder 2 beansprucht, in welchem besagtes Metall in der Katalysatorzusammensetzung in einem Atomverhältnis von Metall zu Silicium im Bereich von 0,001 bis 1,0 angewendet wird.

4. Ein Verfahren wie in Anspruch 3 beansprucht, in welchem das angewendete Atomverhältnis im Bereich von 0,03 bis 0,3 liegt.

5. Ein Verfahren wie in den Ansprüchen 1 bis 4 beansprucht, in welchem mindestens 75 Gewichtsprozent Siliciumdioxid in dem Trägermaterial angewendet werden.

6. Ein Verfahren wie in Anspruch 5 beansprucht, in welchem mindestens 90 Gewichtsprozent Siliciumdioxid in dem Trägermaterial angewendet werden.

7. Ein Verfahren wie in irgendeinem der Ansprüche 1 bis 6 beansprucht, in welchem Schwefelwasserstoff zu Schwefeldioxid oxidiert wird, indem man das freien Sauerstoff enthaltende Gas in einer Menge zuführt, welche bis zu dem Fünffachen der stöchiometrisch für die Oxidation zu Schwefeldioxid erforderlichen Menge an Sauerstoff entspricht.

8. Ein Verfahren wie in Anspruch 7 beansprucht, in welchem das freien Sauerstoff enthaltende Gas in einem Überschuß von 20 bis 280%, bezogen auf die stöchiometrisch erforderliche Menge an Sauerstoff, zugeführt wird.

9. Ein Verfahren wie in Anspruch 1 beansprucht, in welchem Schwefelwasserstoff bei einer Temperatur im Bereich von 180 bis 250°C zu elementarem Schwefel oxidiert wird.

## Revendications

1. Un procédé d'oxydation de l'hydrogène sulfuré, procédé dans lequel un gaz contenant de l'hydrogène sulfuré est mis en contact en présence d'un gaz contenant de l'oxygène libre avec une première composition catalytique à une température comprise entre 150 et 450°C de façon à former du bioxyde de soufre ou à une température comprise entre 150 et 350°C de façon à former du bioxyde de soufre et/ou du soufre élémentaire, dans lequel la première composition catalytique consiste en du titane ou un composé à base de titane sur un support contenant de la silice.

2. Un procédé selon la revendication 1, dans lequel on utilise le composé à base de titane ou le titane sous la forme d'un oxyde ou d'un sulfate.

3. Un procédé selon la revendication 1 ou 2, dans lequel on utilise le métal dans la composition catalytique dans un rapport atomique avec le silicium compris entre 0,001 et 1,0.

4. Un procédé selon la revendication 3, dans lequel le rapport atomique utilisé est compris entre 0,03 et 0,3.

5. Un procédé selon les revendications 1-4, dans lequel on utilise au moins 75 % en poids de silice dans le support.

6. Un procédé selon la revendication 5, dans lequel on utilise au moins 90 % en poids de silice dans le support.

7. Un procédé selon l'une quelconque des revendications 1-6, dans lequel l'hydrogène sulfuré est oxydé en bioxyde de soufre en introduisant le gaz contenant de l'oxygène libre à raison de jusqu'à cinq fois la quantité stoechiométrique d'oxygène nécessaire pour l'oxydation en bioxyde de soufre.

8. Un procédé selon la revendication 7, dans lequel le gaz contenant de l'oxygène libre est introduit à raison d'un excès de 20 % à 280 % par rapport à la quantité stoechiométrique d'oxygène.

9. Un procédé selon la revendication 1, dans lequel l'hydrogène sulfuré est oxydé en soufre élémentaire à une température comprise entre 180°C et 250°C.